# EUROPEAN PATENT SPECIFICATION

(11) **EP 4 092 270 B1**
(45) Date of publication and mention of the grant of the patent: **02.10.2024**
(21) Application number: 22172700.1
(22) Date of filing: 11.05.2022
(51) Int. Cl.: F04B 35/06, F04B 39/12, F04B 35/04, F04B 39/14

(54) **FIXING DEVICE OF MOTOR OF AIR COMPRESSOR**
BEFESTIGUNGSVORRICHTUNG FÜR DEN MOTOR EINES LUFTKOMPRESSORS
DISPOSITIF DE FIXATION DE MOTEUR DE COMPRESSEUR D'AIR

(30) Priority: 19.05.2021 TW 110118139
(43) Date of publication of application: 23.11.2022
(73) Proprietor: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Becker Kurig & Partner Patentanwälte mbB

(56) References cited:
- EP-A1- 3 667 084
- EP-A1- 3 670 911
- EP-A2- 3 067 559
- US-A- 6 095 758

## Description

### FIELD OF THE INVENTION

The present invention relates to a fixing device of a motor of an air compressor which is configured to fix the motor on a body of the air compressor and the air compressor is received in an accommodation box without using any screws.

### BACKGROUND OF THE INVENTION

EP 3 667 084 A1 A discloses a connection structure for a motor of an air compressor containing a base, a cylinder, a motor, and a transmission mechanism. EP 3 067 559 A3 describes an inflator including a box and a compressor unit installed in the box.

Accordingly, conventional air compressors contain a body, a cylinder connected on the body, a motor fixed on the body, and a piston driven by the motor to move in the cylinder reciprocately, such that the motor actuates the piston to move in the cylinder reciprocately, thus sucking, compressing, and discharging airs. Furthermore, the air compressor may be received in an accommodation box.

The motor is fixed on the body by screws, but it is easy to remove from the body after a period of using time. When the screws are inserted through the body to screw with multiple threaded orifices of a casing of the motor, a tool is difficult to screw the screws with the multiple threaded orifices in a limited space. Therefore, the motor cannot be fixed on the body by using the screws easily.

The present invention has arisen to mitigate and/or obviate the afore-described disadvantages.

### SUMMARY OF THE INVENTION

The present invention provides a motor driven air compressor with a fixing device for the motor having the features of claim 1. Preferred embodiments are subject matter of the dependent claims. The air compressor may contain multiple cavities of the motor configured to engage on multiple posts of a body, and at least one retainer is configured to fix the body and the motor, wherein the first end of the at least one retainer is engaged with the body, and the second end of the at least one retainer is engaged on the casing of the motor so that the motor is fixed on the body securely without using any screws.

A retaining portion of an inner wall of the accommodation box may have a trench configured to limit the at least one retainer between the motor and the body so as to avoid the removal of the at least one retainer from the air compressor.

### BRIEF DESCRIPTION OF THE DRAWINGS

FIG. 1 is a perspective view showing the assembly of a fixing device of a motor of an air compressor according to a preferred embodiment of the present invention.
FIG. 2 is a partial perspective view showing the exploded components of the fixing device of the motor of the air compressor according to the preferred embodiment of the present invention.
FIG. 3 is a side plan view showing the assembly of the fixing device of the motor of the air compressor according to the preferred embodiment of the present invention.
FIG. 4 is a cross sectional view showing the assembly of the fixing device of the motor of the air compressor according to the preferred embodiment of the present invention.
FIG. 5 is a partial side plan view showing the assembly of the fixing device of the motor of the air compressor according to the preferred embodiment of the present invention.
FIG. 6 is a perspective view showing the air compressor being received in an accommodation box according to the preferred embodiment of the present invention.
FIG. 7 is a cross sectional view showing the air compressor being received in an accommodation box according to the preferred embodiment of the present invention.

### DETAILED DESCRIPTION OF THE PREFERRED EMBODIMENTS

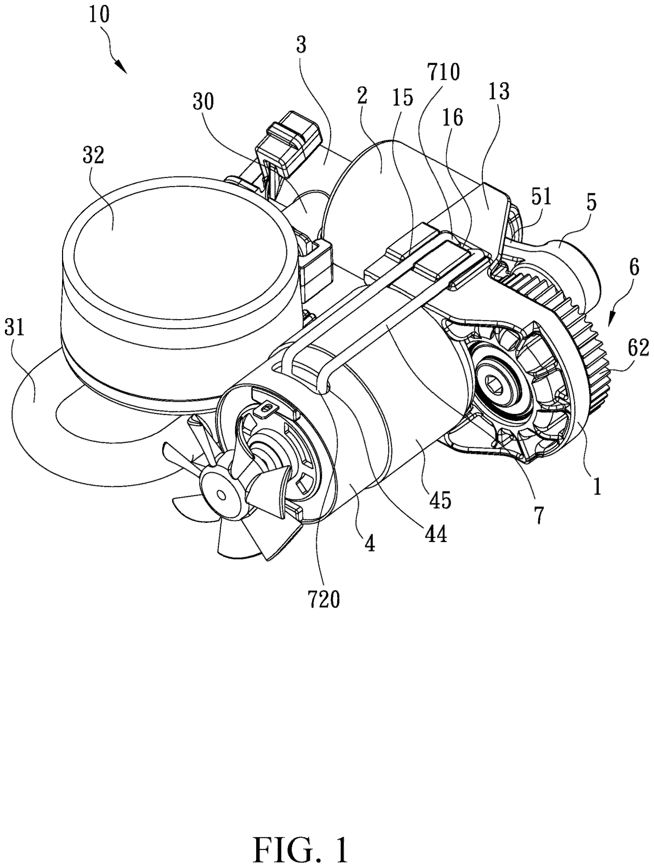

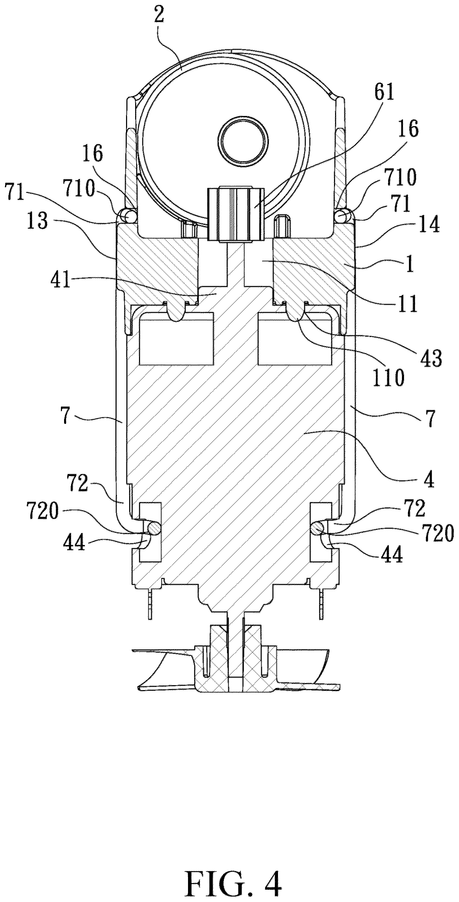

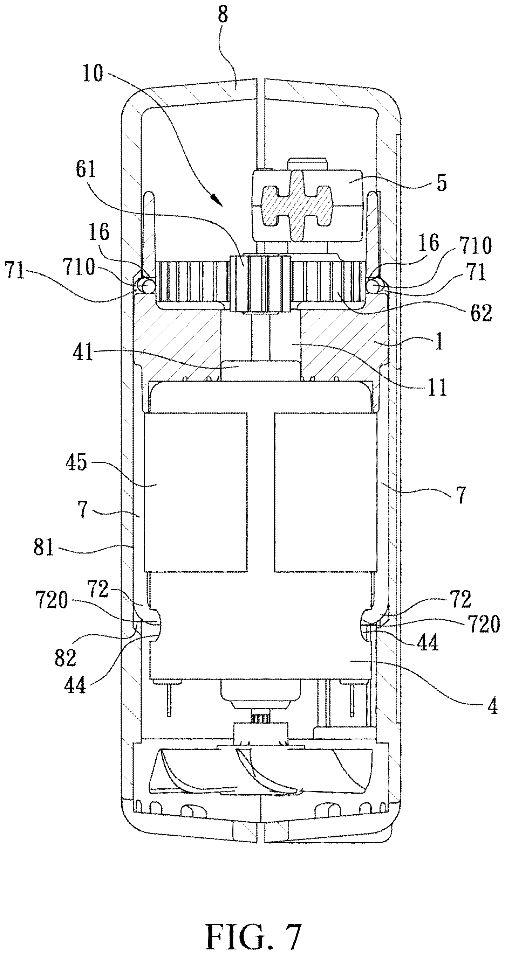

With reference to FIG. 7, an air compressor 10 according to a preferred embodiment of the present invention is received in an accommodation box 8. In this embodiment, as shown in FIGS. 1-4, the air compressor 10 includes a body 1 configured to fix a motor 4, a cylinder 2 connected with the body 1, and a piston 5 driven by the motor 4 to move in the cylinder 2 reciprocately.

The body 1 includes multiple positioning orifices which are a first positioning orifice 11 and a second positioning orifice 12, wherein a small gear 61 is received in the first positioning orifice 11 and is connected on an end of the motor 4, and a connection seat 41 of the motor 4 is accommodated in the first orifice 11. The second positioning orifice 12 is configured to receive a bearing 121. The motor 4 includes a magnetic coil 45 fitted thereon, made of metal material, and configured to conduct magnetism, thus enhancing operation efficiency of the motor 4.

The cylinder 2 is one-piece connected on the body 1 and is in communication with an air storage holder 3, wherein the air storage holder 3 includes at least one tube 30 in which an air hose 31 and a pressure gauge 32 are received.

A transmission mechanism 6 includes a large gear 62 having a counterweight block and configured to mesh with the small gear 61, wherein the large gear 62 is connected with a piston rod 51 of the piston 5 by using an eccentric crank, and the transmission mechanism 6 actuates the piston 5 to move in the cylinder 2 reciprocately so as to produce compressed airs.

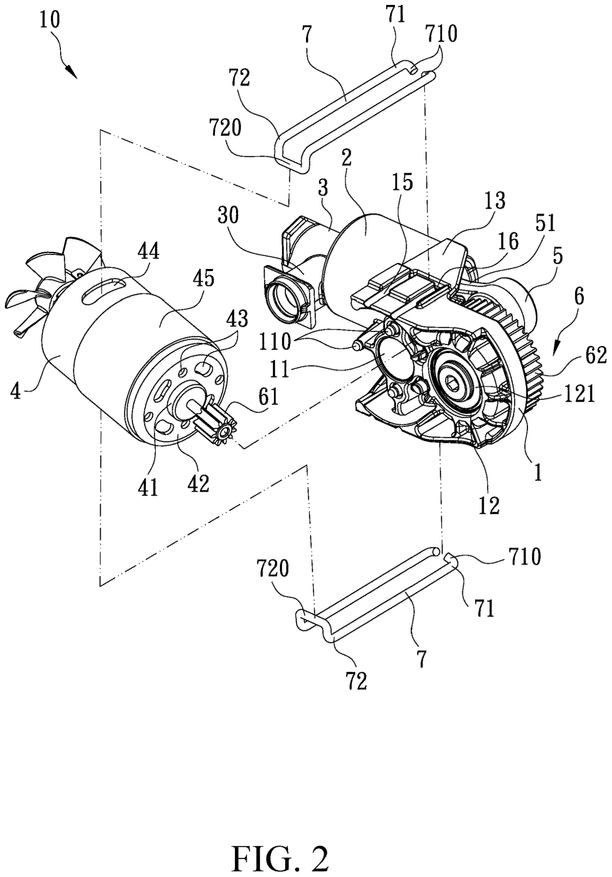

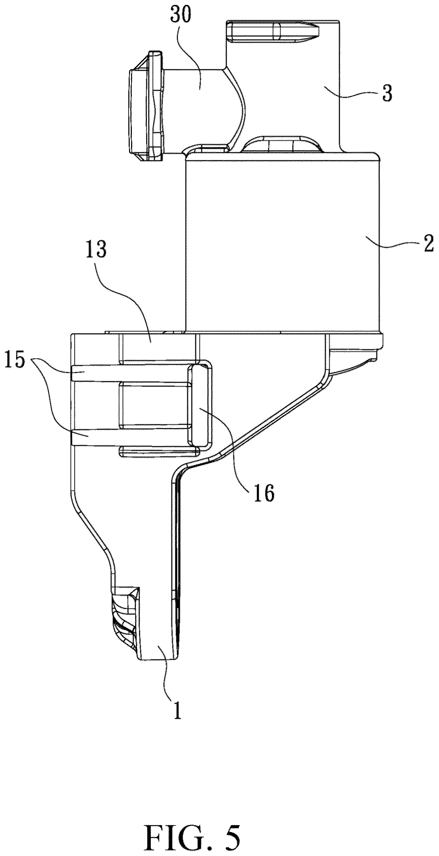

Referring to FIGS. 2-5, the fixing device of the motor of the air compressor comprises at least one retainer 7 configured to fix the body 1 and the motor 4, wherein a first end of the at least one retainer 7 is engaged on the body 1, and a second end of the at least one retainer 7 is engaged on a casing of the motor 4 so that the motor 4 is fixed on the body 1 without using any screws.

With reference to FIG. 2, the motor 4 further includes two dissipation holes 44 symmetrically formed on two sides of the casing thereof and configured to circulate airs and to dissipate heat from the motor 4. The motor 4 further includes multiple cavities 43 defined on an edge 42 thereof outside the connection seat 41, and the body 1 includes multiple posts 110 extending outside the first positioning orifice 11 and corresponding to the multiple cavities 43. When fixing the motor 4 on the body 1, the multiple cavities 43 of the edge 42 of the motor 4 are engaged on the multiple posts 110 of the body 1 to fix the motor 4 without using any screws, the connection seat 41 of the edge 42 of the motor 4 is received in the first positioning orifice 11 of the body 1, wherein the first end of the at least one retainer 7 is engaged with at least one third positioning orifice 16 of the body 1, and the second end of the at least one retainer 7 is engaged on the two dissipation holes 44 of the casing of the motor 4 so that the motor 4 is fixed on the body 1 securely without using any screws.

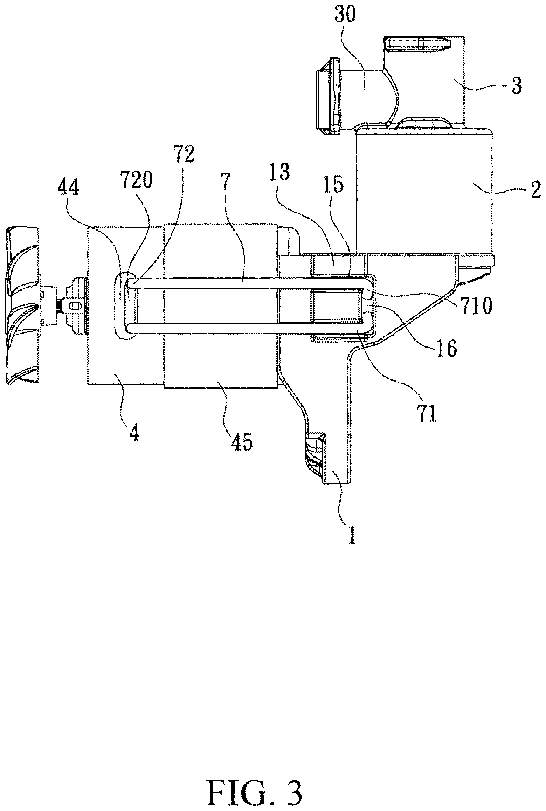

As illustrated in FIG. 2, the first end of the at least one retainer 7 is an open segment 71, and the second end of the at least one retainer 7 is a close segment 72, wherein the open segment 71 of the at least one retainer 7 has a first bent engagement portion 710, and the close segment 72 of the at least one retainer 7 has a second bent engagement portion 720. When the transmission mechanism 6 is connected on the body 1 and the cylinder 2 is connected with an upper portion of the body 1 opposite to the transmission mechanism 6, a first external fence 13 and a second external fence 14 of the body 1 have two receiving grooves 15 and two third positioning orifices 16 which are all defined on the first external fence 13 and the second external fence 14. The at least one retainer 7 is received in the two receiving grooves 15 of the body 1, the first bent engagement portion 710 of the open segment 71 of the at least one retainer 7 is engaged with the two third positioning orifices 16 of the body 1, and the second bent engagement portion 720 of the close segment 72 of the at least one retainer 7 is engaged with the two dissipation holes 44 of the casing of the motor 4, such that the motor 4 is fixed on the body 1 without using any screws, and the at least one retainer 7 is accommodated in the two receiving grooves 15 to avoid a removal from the body 1, as shown in FIG. 3.

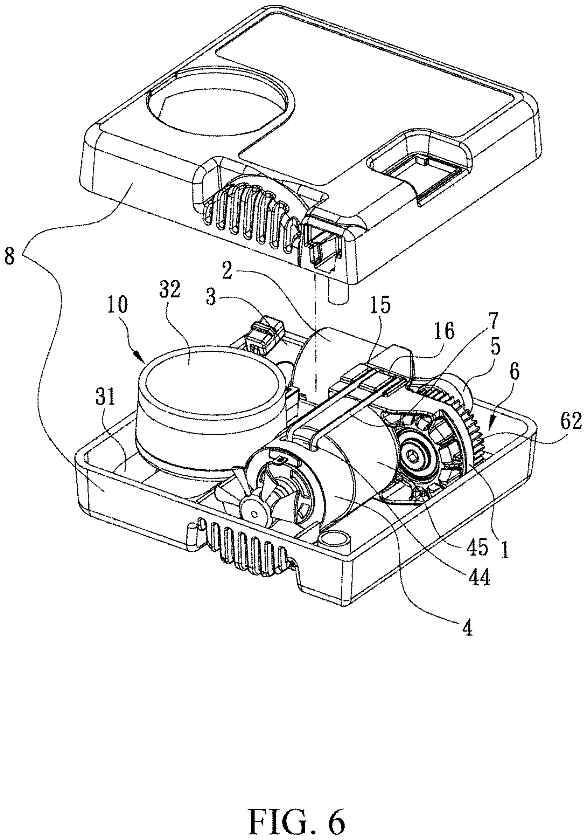

Referring to FIGS. 6-7, the air compressor 10 is received in the accommodation box 8, and a retaining portion 81 of an inner wall of the accommodation box 8 has a trench 82 configured to limit the at least one retainer 7 between the motor 4 and the body 1 so as to avoid the removal of the at least one retainer 7 from the air compressor 10.

Thereby, the fixing device of the motor 4 of the air compressor 10 contains the multiple cavities 43 of the motor 4 configured to engage on the multiple posts 110 of the body 1, and the at least one retainer 7 is configured to fix the body 1 and the motor 4. For example, the first end of the at least one retainer 7 is engaged with the body 1, and the second end of the at least one retainer 7 is engaged on the casing of the motor 4 so that the motor 4 is fixed on the body 1 securely without using any screws.

## Claims

1. A motor driven air compressor with a fixing device for the motor (4), the motor driven air compressor (10) being received in an accommodation box (8) and comprising:
a body (1) includes multiple positioning orifices which are a first positioning orifice (11) and a second positioning orifice (12);
a cylinder (2) connected on the body (1) and communicating with an air storage holder (3);
a motor (4) fixed on the body (1), a small gear (61) being received in the first positioning orifice (11) of the body (1) and being connected on an end of the motor (4), and a connection seat (41) of the motor (4) being accommodated in the first orifice (11);
a transmission mechanism (6) actuating a piston (5) to move in the cylinder (2) reciprocately so as to produce compressed airs, wherein at least one retainer (7) is configured to fix the body (1) and the motor (4), wherein a first end of the at least one retainer (7) is engaged on the body (1), and a second end of the at least one retainer (7) is engaged on a casing of the motor (4) so that the motor (4) is fixed on the body (1) without using any screws,
wherein the motor (4) includes two dissipation holes (44) symmetrically formed on two sides of the casing,
**characterized in that**
the first end of the at least one retainer (7) is an open segment (71), and the second end of the at least one retainer (7) is a close segment (72), wherein the open segment (71) of the at least one retainer (7) has a first bent engagement portion (710), and the close segment (72) of the at least one retainer (7) has a second bent engagement portion (720), and wherein, when the transmission mechanism (6) is connected on the body (1) and the cylinder (2) is connected with an upper portion of the body (1) opposite to the transmission mechanism (6), a first external fence (13) and a second external fence (14) of the body (1) having two receiving grooves (15) and two third positioning orifices (16) which are all defined on the first external fence (13) and the second external fence (14), the at least one retainer (7) is received in the two receiving grooves (15) of the body (1), the first bent engagement portion (710) of the open segment (71) of the at least one retainer (7) is engaged with the two third positioning orifices (16) of the body (1), and the second bent engagement portion (720) of the close segment (72) of the at least one retainer (7) is engaged with the two dissipation holes (44) of the casing of the motor (4).

2. The motor driven air compressor (10) as claimed in claim 1, **characterized in that** the first end of the at least one retainer (7) is engaged on the body (1), and the second end of the at least one retainer (7) is engaged on the two dissipation holes (44) of the casing of the motor (4) so that the motor (4) is fixed on the body (1) without using any screws.

3. The motor driven air compressor (10) as claimed in claim 1, **characterized in that** the motor (4) further includes multiple cavities (43) defined on an edge (42) thereof outside the connection seat (41), and the body (1) includes multiple posts (110) extending outside the first positioning orifice (11) and corresponding to the multiple cavities (43); when fixing the motor (4) on the body (1), the multiple cavities (43) of the edge (42) of the motor (4) are engaged on the multiple posts (110) of the body (1) to fix the motor (4).

4. The motor driven air compressor (10) as claimed in claim 1, **characterized in that** the air compressor (10) is received in the accommodation box (8), and a retaining portion (81) of an inner wall of the accommodation box (8) has a trench (82) configured to limit the at least one retainer (7) between the motor (4) and the body (1) so as to avoid a removal of the at least one retainer (7) from the air compressor (10).

## Patentansprüche

1. Motorgetriebener Luftkompressor mit einer Befestigungsvorrichtung für den Motor (4), wobei der motorgetriebene Luftkompressor (10) in einem Unterbringungskasten (8) aufgenommen ist und umfasst:
einen Körper (1) mit mehreren Positionieröffnungen, die eine erste Positionieröffnung (11) und eine zweite Positionieröffnung (12) sind;
einen Zylinder (2), der mit dem Körper (1) verbunden ist und mit einem Luftspeicherbehälter (3) in Verbindung steht;
einen Motor (4), der an dem Körper (1) befestigt ist, wobei ein kleines Zahnrad (61) in der ersten Positionierungsöffnung (11) des Körpers (1) aufgenommen und mit einem Ende des Motors (4) verbunden ist, und ein Verbindungssitz (41) des Motors (4) in der ersten Öffnung (11) untergebracht ist;
einen Übertragungsmechanismus (6), der einen Kolben (5) so betätigt, dass er sich in dem Zylinder (2) hin- und herbewegt, um Druckluft zu erzeugen, wobei mindestens ein Halter (7) so konfiguriert ist, dass er den Körper (1) und den Motor (4) fixiert, wobei ein erstes Ende des mindestens einen Halters (7) mit dem Körper (1) in Eingriff steht und ein zweites Ende des mindestens einen Halters (7) mit einem Gehäuse des Motors (4) in Eingriff steht, so dass der Motor (4) ohne Verwendung von Schrauben an dem Körper (1) fixiert ist,
wobei der Motor (4) zwei Ableitungslöcher (44) aufweist, die symmetrisch auf zwei Seiten des Gehäuses ausgebildet sind,
**dadurch gekennzeichnet, dass**
das erste Ende des mindestens einen Halters (7) ein offenes Segment (71) ist, und das zweite Ende des mindestens einen Halters (7) ein geschlossenes Segment (72) ist, wobei das offene Segment (71) des mindestens einen Halters (7) einen ersten gebogenen Eingriffsabschnitt (710) aufweist, und das geschlossene Segment (72) des mindestens einen Halters (7) einen zweiten gebogenen Eingriffsabschnitt (720) aufweist, und wobei, wenn der Übertragungsmechanismus (6) mit dem Körper (1) verbunden ist und der Zylinder (2) mit einem oberen Abschnitt des Körpers (1) gegenüber dem Übertragungsmechanismus (6) verbunden ist, ein erster Außenanschlag (13) und ein zweiter Außenanschlag (14) des Körpers (1) mit zwei Aufnahmenuten (15) und zwei dritten Positionieröffnungen (16), die alle an dem ersten Außenanschlag (13) und dem zweiten Außenanschlag (14) definiert sind, der mindestens eine Halter (7) in den beiden Aufnahmenuten (15) des Körpers (1) aufgenommen ist, der erste gebogene Eingriffsabschnitt (710) des offenen Segments (71) des mindestens einen Halters (7) mit den beiden dritten Positionierungsöffnungen (16) des Körpers (1) in Eingriff steht und der zweite gebogene Eingriffsabschnitt (720) des geschlossenen Segments (72) des mindestens einen Halters (7) mit den beiden Ableitungslöchern (44) des Gehäuses des Motors (4) in Eingriff steht.

2. Motorgetriebener Luftkompressor (10) gemäß Anspruch 1, **dadurch gekennzeichnet, dass** das erste Ende des mindestens einen Halters (7) an dem Körper (1) eingreift und das zweite Ende des mindestens einen Halters (7) an den zwei Ableitungslöchern (44) des Gehäuses des Motors (4) eingreift, so dass der Motor (4) an dem Körper (1) ohne Verwendung irgendwelcher Schrauben befestigt ist.

3. Motorgetriebener Luftkompressor (10) gemäß Anspruch 1, **dadurch gekennzeichnet, dass** der Motor (4) außerdem mehrere Hohlräume (43) aufweist, die an einem Rand (42) dessen außerhalb des Verbindungssitzes (41) definiert sind, und dass der Körper (1) mehrere Pfosten (110) aufweist, die sich außerhalb der ersten Positionierungsöffnung (11) erstrecken und den mehreren Hohlräumen (43) entsprechen; beim Befestigen des Motors (4) an dem Körper (1) die mehreren Hohlräume (43) des Randes (42) des Motors (4) in die mehreren Pfosten (110) des Körpers (1) eingreifen, um den Motor (4) zu befestigen.

4. Motorgetriebener Luftkompressor (10) gemäß Anspruch 1, **dadurch gekennzeichnet, dass** der Luftkompressor (10) in dem Unterbringungskasten (8) aufgenommen ist und ein Halteabschnitt (81) einer Innenwand des Unterbringungskastens (8) einen Graben (82) aufweist, der so konfiguriert ist, dass er den mindestens einen Halter (7) zwischen dem Motor (4) und dem Körper (1) begrenzt, um ein Entfernen des mindestens einen Halters (7) von dem Luftkompressor (10) zu vermeiden.

## Revendications

1. Un compresseur d'air entraîné par moteur avec un dispositif de fixation pour le moteur (4), le compresseur d'air (10) entraîné par moteur étant reçu dans un boîtier de logement (8) et comprenant :
un corps (1) comprenant plusieurs orifices de positionnement qui sont un premier orifice de positionnement (11) et un deuxième orifice de positionnement (12) ;
un cylindre (2) relié au corps (1) et communiquant avec un support de stockage d'air (3) ;
un moteur (4) fixé sur le corps (1), un petit engrenage (61) étant reçu dans le premier orifice de positionnement (11) du corps (1) et étant relié à une extrémité du moteur (4), et un siège de connexion (41) du moteur (4) étant logé dans le premier orifice (11) ;
un mécanisme de transmission (6) actionnant un piston (5) pour se déplacer dans le cylindre (2) en va-et-vient de manière à produire de l'air comprimé, au moins un élément de retenue (7) étant configuré pour fixer le corps (1) et le moteur (4), une première extrémité dudit au moins un élément de retenue (7) étant engagée sur le corps (1), et une deuxième extrémité dudit au moins un élément de retenue (7) étant engagée sur un carter du moteur (4) de sorte que le moteur (4) est fixé sur le corps (1) sans utiliser de vis,
le moteur (4) comprenant deux trous de dissipation (44) formés symétriquement sur deux côtés du carter,
**caractérisé en ce que**
la première extrémité dudit au moins un élément de retenue (7) est un segment ouvert (71), et la deuxième extrémité dudit au moins un élément de retenue (7) est un segment fermé (72), le segment ouvert (71) dudit au moins un élément de retenue (7) ayant une première partie d'engagement courbée (710), et le segment fermé (72) dudit au moins un élément de retenue (7) ayant une deuxième partie d'engagement courbée (720), et, lorsque le mécanisme de transmission (6) est connecté sur le corps (1) et que le cylindre (2) est connecté à une partie supérieure du corps (1) opposée au mécanisme de transmission (6), une première barrière externe (13) et une deuxième barrière externe (14) du corps (1) présentent deux rainures de réception (15) et deux troisièmes orifices de positionnement (16) qui sont tous définis sur la première barrière externe (13) et la deuxième barrière externe (14), ledit au moins un élément de retenue (7) est reçu dans les deux rainures de réception (15) du corps (1), la première partie d'engagement courbée (710) du segment ouvert (71) dudit au moins un élément de retenue (7) est en engagement avec les deux troisièmes orifices de positionnement (16) du corps (1), et la deuxième partie d'engagement courbée (720) du segment fermé (72) dudit au moins un élément de retenue (7) est en engagement avec les deux trous de dissipation (44) du carter du moteur (4).

2. Le compresseur d'air (10) entraîné par moteur selon la revendication 1, **caractérisé en ce que** la première extrémité dudit au moins un élément de retenue (7) est engagée sur le corps (1), et la deuxième extrémité dudit au moins un élément de retenue (7) est engagée sur les deux trous de dissipation (44) du carter du moteur (4) de sorte que le moteur (4) est fixé sur le corps (1) sans utiliser de vis.

3. Le compresseur d'air (10) entraîné par moteur selon la revendication 1, **caractérisé en ce que** le moteur (4) comprend en outre une pluralité de cavités (43) définies sur un bord (42) de celui-ci à l'extérieur du siège de connexion (41), et le corps (1) comprend une pluralité de plots (110) s'étendant à l'extérieur du premier orifice de positionnement (11) et correspondant à la pluralité de cavités (43) ; lors de la fixation du moteur (4) sur le corps (1), la pluralité de cavités (43) du bord (42) du moteur (4) est engagée sur la pluralité de plots (110) du corps (1) pour fixer le moteur (4).

4. Le compresseur d'air (10) entraîné par moteur selon la revendication 1, **caractérisé en ce que** le compresseur d'air (10) est reçu dans le boîtier de logement (8), et une partie de retenue (81) d'une paroi intérieure du boîtier de logement (8) présente une tranchée (82) configurée pour limiter ledit au moins élément de retenue (7) entre le moteur (4) et le corps (1) de manière à éviter un retrait dudit au moins un élément de retenue (7) du compresseur d'air (10).
